# FASCICULE DE BREVET EUROPEEN

(11) **EP 3 619 990 B1**
(45) Date de publication et mention de la délivrance du brevet: **27.10.2021**
(21) Numéro de dépôt: 18719608.4
(22) Date de dépôt: 02.05.2018
(51) Int. Cl.: H04W 72/00, H04W 76/00

(54) **PROCÉDÉ ET SYSTÈME DE DISTRIBUTION DANS UN RÉSEAU MIXTE POINT-À-MULTIPOINT ET POINT-À-POINT (D2D)**
VERFAHREN UND SYSTEM ZUR VERTEILUNG IN EINEM GEMISCHTEN PUNKT-ZU-MEHRPUNKT- UND PUNKT-ZU-PUNKT(D2D)-NETZWERK
METHOD AND SYSTEM FOR DISTRIBUTION IN A MIXED POINT-TO-MULTIPOINT AND POINT-TO-POINT (D2D) NETWORK

(30) Priorité: 04.05.2017 FR 1700483
(43) Date de publication de la demande: 11.03.2020
(73) Titulaire: Thales, 92400 Courbevoie (FR)
(72) Inventeur: REBECCHI, Filippo, 92622 Gennevilliers Cedex (FR); CONAN, Vania, 92622 Gennevilliers Cedex (FR)
(74) Mandataire: Marks & Clerk France
(86) Numéro de dépôt international: PCT/EP2018/061190
(87) Numéro de publication internationale: WO 2018/202702

(56) Documents cités:
- WO-A1-2015/110630
- WO-A1-2015/110630
- US-A1- 2012 044 892
- CHEN JIASI ET AL: "Fair and optimal resource allocation for LTE multicast (eMBMS): Group partitioning and dynamics", 2015 IEEE CONFERENCE ON COMPUTER COMMUNICATIONS (INFOCOM), IEEE, 26 avril 2015 (2015-04-26), pages 1266-1274, XP033208394, DOI: 10.1109/INFOCOM.2015.7218502
- Wei Yang ET AL: "Reliable Multicasting for Device-to-Device Radio Underlaying Cellular Networks", , 22 août 2010 (2010-08-22), XP055128021, Extrait de l'Internet: URL:http://arxiv.org/abs/1008.3741

## Description

L'invention concerne un procédé et un système permettant de distribuer un contenu (service multimédia) à un ensemble d'utilisateurs (ou dispositifs mobiles) dans un réseau de communication mixte utilisant la technologie de transmission point-à-multipoint et dispositif-à-dispositif ou point-à-point ou D2D. Elle trouve son application pour des topologies de réseau comprenant une source et des destinations multiples qui peuvent être atteintes, soit à travers une simple communication radio point-à-multipoint, soit à travers des communications courte portée multi-bond.

L'invention peut être utilisée dans le domaine des réseaux sans fil qui utilisent conjointement des communications point-à-multipoint et dispositif-à-dispositif D2D.

Il existe une demande de plus en plus forte de la part des utilisateurs pour des services multimédias.

En exploitant la nature diffusante du canal sans fil, les communications radio point-à-multipoint utilisent une seule liaison radio partagée entre plusieurs équipements utilisateurs au sein d'une même cellule radio. Les équipements utilisateurs UE reçoivent le même contenu, permettant, en principe, une utilisation très efficace en termes de ressources radio utilisées à la station de base.

Les communications radio point-à-multipoint de ce type présentent des problèmes qui limitent leur efficacité, notamment (i) l'obligation de dimensionner le système en tenant compte de l'utilisateur avec le pire canal, (ii) l'absence totale de fiabilité. La modulation et le codage ou MCS de la transmission doivent être suffisamment robustes pour assurer la réception pour chaque utilisateur. Pour cela, la modulation et le codage de la transmission sont, soit fixés et très conservateurs, soit adaptés aux conditions les plus défavorables, i.e., le pire canal parmi l'ensemble des utilisateurs, ce dernier dictant la performance globale de la cellule de communication.

En misant sur des communications D2D en complément aux transmissions radio point-à-multipoint, il est possible d'améliorer la performance en matière de débit fourni aux utilisateurs. Au lieu d'atteindre l'ensemble des utilisateurs présents sous la couverture radio de la cellule avec la même transmission radio point-à-multipoint, il est possible d'atteindre seulement un sous-ensemble d'entre eux, les utilisateurs qui présentent la meilleure qualité de canal, tout en exploitant des communications D2D multi-bond pour relayer la transmission aux autres utilisateurs. Ceci permet d'utiliser à la station de base une transmission point-à-multipoint avec une modulation et codage de canal beaucoup plus efficace.

Dans le cas de la norme LTE (Long Term Evolution), l'allocation des ressources et l'ordonnancement des transmissions sont contrôlés par la station de base et relayés aux équipements utilisateurs UE en utilisant des canaux de contrôle tels que le canal de contrôle de liaison descendante physique PDCCH (Physical Downlink Control Channel), le canal de contrôle multicast physique PMCH (Physical Multicast Control Chanel) et le canal de contrôle de lien montant PUCCH (Physical Uplink Control Channel). Ces décisions peuvent comprendre la modulation et le codage de la transmission point-à-multipoint, l'allocation des communications D2D entre les UE et l'ordonnancement des paquets sur ces liens. Les décisions sont prises à partir des informations de connectivité et de qualité des liens (équipement utilisateur UE-station de base BS et UE-UE) relayées périodiquement par les équipements utilisateurs, par exemple au moyen de messages d'indicateur de qualité de canal CQI (Channel Quality Indicator) dans la spécification LTE.

Trouver l'allocation optimale des ressources et des flux est un problème qui est complexe. Le problème survient, notamment, quand le nombre des variables en jeux augmente (nombre d'utilisateurs, de liens entre utilisateurs, ou bien de ressources radios RR à allouer), parce que la complexité d'une telle approche croît de façon exponentielle. Dans ce cas, il est très difficile de satisfaire les délais requis par l'adaptation au canal (quelques millisecondes selon la mobilité des équipements utilisateurs et la taille de l'allocation).

La distribution point-à-multipoint dans un réseau sans fil, pour offrir de manière efficace des services multimédia, a été introduite initialement dans la version 6 du projet de coopération pour les réseaux de troisième génération 3GPP (spécification du WCDMA). Cependant, la capacité à transmettre des données à une multitude de destinataires est aussi essentielle pour des communications de groupe dans le cas de scénario de sécurité publique. La coopération 3GPP a récemment évalué différentes spécifications et architectures qui permettent des transmissions point-à-multipoint radio. En particulier, dans les dernières versions des spécifications pour les différents services : le service de diffusion multiple multimédia ou en anglo-saxon « *evolved Multimedia Broadcast and Multicast Service»* (eMBMS), les systèmes de communication de groupe ou « *Group Communications System Enablers »* (GCSE), la transmission point-à-multipoint avec une seule cellule « *Single-Cell Point-to-Multipoint »* (SC-PTM) et le service Talkie-Walkie pour les communications critiques ou *« Mission Critical Push to Talk »* (MCPTT) ont été mis au point.

En particulier, l'eMBMS représente la première spécification qui permet de définir une seule fréquence réseau ou en anglo-saxon *single frequency network (SFN)* et un sous-ensemble de station de base dans une zone géographique qui fournissent un service IP point-à-multipoint sur la même fréquence. Dans un tel contexte, la quantité de ressources radios consommées pour la communication point-à-multipoint est indépendante du nombre d'équipements utilisateurs dans le groupe, ce qui est avantageux d'un point de vue de l'utilisation des ressources radio.

Cependant, l'utilisation de plusieurs stations de base émettant sur la même fréquence a comme limitation de ne pas pouvoir utiliser l'adaptation au canal due à l'absence d'un canal de retour. En conséquence, la station de base eNB est forcée d'utiliser une technique de modulation et codage très robuste, qui est fixée au départ, ce qui conduit à une efficacité spectrale dégradée et influence négativement le débit offert aux équipements utilisateurs UE.

Une solution plus efficace en termes de ressources radios est décrite dans la spécification du *SC-PTM,* qui peut être considérée comme la fusion des techniques de transmission point-à-point et eMBMS. Le *SC-PTM* représente une méthode d'accès radio dédiée aux communications point-à-multipoint sur une cellule individuelle et en réutilisant des canaux de communications habituellement utilisés pour les transmissions point-à-point. Pour cette raison, au contraire de l'eMBMS, le SC-PTM a la possibilité d'utiliser différentes techniques d'adaptation au canal (Adaptive Modulation and Coding - AMC) et de retransmission automatique HARQ (Hybrid Automatic Repeat Request), tout en étant plus efficace et fiable.

L'utilisation des communications D2D couplées aux communications *SC-PTM* ou *eMBMS* peut améliorer davantage l'efficacité de la distribution de contenu à un groupe.

A la connaissance du demandeur, il n'existe pas de solution permettant d'allouer des ressources dans un réseau radio point-à-multipoint et D2D multi-bond. L'art antérieur décrit des protocoles de distribution de contenu à l'aide de communications D2D et en complément aux transmissions multicast.

L'art antérieur utilise des communications D2D couplées au multicast. Par exemple, le procédé D2D-SF est un procédé permettant d'exploiter des communications D2D pour relayer un flux multicast tout en améliorant le débit global de la cellule. Dans son implémentation principale, le procédé D2D-SF élit des nœuds relayeurs (chefs de cluster), ayant une fonction de relais, qui sont en charge de faire le lien entre la station de base BS et les autres équipements utilisateurs par des communications D2D. Chaque nœud relayeur est en charge d'un cluster de nœuds. Les nœuds relayeurs sont élus en tenant compte de la qualité du lien qui les relie à la station de base BS.

Considérons le cas où la station de base BS a du contenu à transmettre en multicast :
- Les qualités des liens cellulaires (entre BS et UE) et des liens D2D (entre UE) sont reçues et ordonnées à la station de base à travers les messages d'information sur la qualité de canal ou CQI (Channel Quality Information),
- Pour chaque valeur m du schéma de modulation et codage MCS (Modulation and Coding Schéma) :
   o Le groupe de multicast qui peut soutenir le MCS m est recherché,
   o Dans ce groupe, les nœuds relayeurs sont déterminés, selon la qualité de leur lien D2D envers les autres UEs,
   o Les ressources radio sont allouées au niveau de la station de base et des liens D2D,
   o Si la configuration est réalisable, i.e., tous les nœuds sont couverts et les ressources sont disponibles, le débit global de la cellule est conservé et le procédé considère la valeur suivante de m,
   o Dans le cas contraire, le procédé sélectionne la configuration qui maximise le débit global de la cellule.
Cette solution permet donc d'augmenter le débit général à travers le réseau et d'améliorer l'efficacité spectrale. Dans ce cas, tous les nœuds relayeurs sélectionnés transmettent le paquet à un seul bond. Ce mode de fonctionnement se résume à une transmission D2D à un seul bond avec l'élection d'un chef de cluster.

Dans l'approche connue sous l'expression anglo-saxonne « *joint multicast*/*D2D learning-based approach* », des algorithmes d'apprentissage automatique sont mis en œuvre pour détecter la taille du groupe du multicast (et le MCS d'émission) qui minimise l'utilisation de ressources radios RR à la station de base BS. Les communications D2D sont de type opportuniste multi-bond, et ne sont pas ordonnancées par la station de base qui se limite à évaluer le résultat du processus de diffusion en D2D. Dans cette stratégie, les communications D2D ont lieu sur une bande différente (IEEE 802.11) de celle des transmissions point-à-multipoint (LTE).

D'autres solutions connues de l'art antérieur ont essayé d'améliorer l'efficacité des transmissions point-à-multipoint sans utiliser des communications D2D.

Par exemple, dans le document intitulé « Optimized Opportunistic Multicast Scheduling (OMS) over Wireless Cellular Networks », T.-P. Low, and M.-O. Pun, and Y.-W. P. Hong, and C.-C. Jay Kuo, IEEE Transactions on Wireless Communications, 2010, les auteurs considèrent un mécanisme qui émet en multicast dans chaque créneau temporel ou « slot » à des sous-ensembles d'équipements utilisateurs UE différents.

En utilisant des débits d'émission différents, dans le document « Radio Resource Management for Group-Oriented services in LTE-A », L. Militano, and D. Niyato, and M.Condoluci, and G. Araniti, and A. lera, and G. Molica Bisci, In IEEE Transactions on Vehicular Technology, 2015, les auteurs ciblent des sous-ensembles d'équipements utilisateurs avec une qualité de canal similaire. Les sous-groupes sont formés avec une approche de négociation.

Dans le document « Fair and optimal resource allocation for LTE multicast (eMBMS): Group partitioning and dynamics », J. Chen, and M. Chiang, and J. Erman and G. Li, and K. K. Ramakrishnan, and R. K. Sinha, INFOCOM 2015, les sous-groupes sont formés via un processus d'optimisation qui tient compte de l'équité proportionnelle de leur débit et de l'usage de ressources radio à la station de base.

Le document intitulé « Group Communication over LTE: a radio access perspective », J. Kim, and S. W. Choi, and W. Y. Shin, and Y. S. Song, and Y.K. Kim, IEEE Communications Magazine, 2016, propose un mécanisme de codage des retransmissions HARQ pour le SC-PTM afin d'améliorer l'efficacité des transmissions point-à-multipoint.

Un autre exemple peut être trouvé dans le document de brevet WO2015/110630.

Dans la suite de la description, les expressions « équipement utilisateur », « utilisateur » ou « dispositif mobile » et « UE » ou « UEₖ » sont employées pour désigner un utilisateur dans un réseau de communication. Similairement, le mot « lien » désigne l'expression « canal radio ».

Le procédé et le système selon l'invention reposent sur une nouvelle approche qui considère conjointement des problématiques d'allocation de ressources, d'ordonnancement et de routage, dans un réseau radio mixte utilisant la communication point-à-multipoint et des relais D2D afin d'améliorer le débit minimal prévu à un équipement utilisateur. Cette approche permet d'améliorer considérablement la performance en termes de débit pour un flux multidestinataire dans une cellule radio. En utilisant cette technique, le débit d'émission n'est plus soumis aux conditions du « pire lien radio » entre la station de base et les équipements utilisateurs. Ceci permet aussi de limiter au maximum les disparités entre le débit reçu et le débit recevable par les utilisateurs selon leur qualité de canal.
L'invention concerne un procédé pour transmettre des contenus à un ensemble d'utilisateurs UEₖ dans un réseau de communication sans fils, en utilisant à la fois des communications point-à-multipoint entre au moins une station de base BS et plusieurs utilisateurs UEₖ et des relais point-à-point ou D2D entre plusieurs utilisateurs (UEₖ-UEₖ) caractérisé en ce qu'il alloue les ressources radio en exécutant au moins les étapes suivantes :
Mesurer ou évaluer la qualité des liens radio entre la station de base BS et les utilisateurs UEₖ,
Mesurer ou évaluer la qualité des liens radio D2D entre les différents utilisateurs UEₖ,
Sélectionner, en fonction des informations de qualité de liens, un, et seulement un, sous-ensemble de utilisateurs *MGᵢ*^{*}, de cardinalité supérieure ou égale à 1, et un schéma de modulation et de codage MCS à utiliser pour la transmission point-à-multipoint effectuée par la station de base afin de garantir la capacité de décoder une telle transmission à tous les utilisateurs faisant partie du sous-ensemble sélectionné *MGᵢ^{*}*,
Générer une arborescence *A*, de cardinalité supérieure ou égale à 0, formée exclusivement par des liens UEk→UEk (D2D) existant entre les utilisateurs pour relayer le contenu de la transmission point-à-multipoint à partir des utilisateurs faisant partie du sous-ensemble *MGᵢ^{*}* comme choisi à l'étape précédente vers tous les autres,
Allouer des ressources radio sur les liaisons D2D définies par l'arborescence *A*.

Le procédé peut comporter au moins les étapes suivantes :
Considérer l'index maximum MCS i* pour le schéma de codage et de modulation de la transmission point-à-multipoint qui couvre l'ensemble des utilisateurs UEₖ du réseau, initialiser une variable T_{old} = 0,
Construire l'ensemble des dispositifs utilisateurs qui ont les capacités pour démoduler le ou les messages codés et modulés avec ce schéma de codage et modulation MCS i*, qui vont former le groupe de multicast *MGᵢ^{*}*, calculer le débit M(i*) pour chaque utilisateur avec ce schéma de codage et de modulation,
Pour les utilisateurs ne disposant pas des capacités pour démoduler les messages codés avec le schéma MCS i*,
   Construire une arborescence A composée d'un ensemble de liens L qui relient un dispositif mobile UEₖ n'appartenant pas à *MGi*^{*} à un et un seul dispositif mobile UEₖ appartenant au groupe *MGᵢ^{*}*,
   Utiliser un algorithme d'allocation des ressources sur les liens L ainsi définis,
Evaluer la valeur de débit minimum D(i*) alloué sur les liens L de l'arborescence A, sauvegarder la valeur minimale T(i*) correspondant au débit minimum entre D(i*) et le débit de la transmission point-à-multipoint M(i*),
   Si le débit sur les liens D2D, D(i*), est supérieur au débit de la transmission point-à-multipoint M(i*), le débit de la transmission point-à-multipoint est retenu comme débit minimum donc T(i*) = M(i*), sinon donner à la valeur de débit la valeur minimale, T(i*) = D(i*),
   - D(i*) représente le débit minimal sur les liens L de l'arborescence A dans l'algorithme d'allocation des ressources,
   - T(i*) est le minimum entre le débit sur les liens de l'arborescence D(i*) et le débit sur les liens multicast M(i*), T(i*)=min(D(i*), M(i*)),
Dans le cas où tous les utilisateurs appartiennent à *MGᵢ^{*}*, alors T(i*) = M(i*), Si le débit alloué aux liens présents pour l'index maximum du schéma de modulation codage *T(i^{*})* est supérieur ou égal au débit alloué pour l'index T_{old}:
   o Si le débit minimum alloué aux liens *T(i^{*})==M(i^{*}),* le débit reçu à chaque utilisateur avec la modulation et codage i*,
      ▪ Sauvegarder T_{old} = T(i*), passer à l'index de modulation *i^{*}*=*i*^{*}+*1* et retourner à l'étape de construction du groupe *MGᵢ^{*}*,
   o Sinon, si *T(i^{*})*< *M(i^{*}), :*
      ▪ Retourner la valeur de MCS *i*^{*} et *Alloc_D2D(i*),*
Sinon, *T(i^{*})* est inférieur à T_{old}, retourner la valeur de MCS *i*-1* et son allocation D2D, *Alloc_D2D(i^{*}-1).*

Selon une variante de réalisation, le procédé utilise des messages CQI pour évaluer la qualité des liens (BS→ UEₖ et UEₖ→ UEₖ).

Le procédé peut utiliser la connaissance des positions des utilisateurs et de la station de base pour évaluer la qualité des liens (BS→ UEₖ et UEₖ→ UEₖ).

Selon une variante de réalisation l'arborescence A est construite en utilisant un algorithme d'Edmonds-Chu.

Le procédé utilise pour l'allocation des ressources un algorithme glouton.

Le procédé est exécuté au sein d'un processeur de la station de base, par exemple au niveau d'un bloc ordonnanceur de la station de base.

Le procédé peut allouer des ressources pour la distribution d'un contenu dans un réseau de communication supportant la technologie LTE.

Selon une variante de réalisation, le procédé alloue des ressources pour distribuer un contenu dans un réseau de communication utilisant une méthode d'accès à répartition multiple au canal TDMA.

Le procédé utilise, par exemple, un message choisi parmi les messages « SCI », « DCI » et « SC-PTM configuration » et l'un des canaux disponibles dans la norme « LTE3 », « PUCCH », « MCCH » et « PDCCH » pour transmettre l'allocation de ressources choisie à la station de base vers les utilisateurs UEₖ.

Le procédé utilise, par exemple, des messages de signalisation spécifiques dans un réseau de communication utilisant une technique d'accès au canal TDMA pour notifier l'allocation de ressources choisie par la station de base aux utilisateurs UEₖ.

L'invention concerne aussi un système pour allouer des ressources dans un réseau de communication supportant une communication point-à-multipoint entre au moins une station de base et plusieurs utilisateurs UEₖ et des communications point-à-point ou D2D entre plusieurs utilisateurs (UEₖ-UEₖ) caractérisé en ce qu'il comporte au moins un processeur adapté à allouer des ressources radio en exécutant au moins les étapes suivantes :
Mesurer ou évaluer la qualité des liens BS→UEₖ et en parallèle la qualité des liens D2D existants entre plusieurs utilisateurs, UEₖ→UEₖ,
Sélectionner, en fonction des informations de qualité des liens, un, et seulement un, sous-ensemble de utilisateurs *MGᵢ*^{*}, de cardinalité supérieure ou égale à 1, et un schéma de modulation et de codage à utiliser pour la transmission point-à-multipoint effectuée par la station de base afin de garantir la capacité de décoder une telle transmission à tous les utilisateurs faisant partie du sous-ensemble sélectionné *MGᵢ*^{*},
Générer une arborescence A, de cardinalité supérieure ou égale à 0, formée exclusivement par des liens UEk→UEk (D2D) existant entre les utilisateurs pour relayer le contenu de la transmission point-à-multipoint à partir des utilisateurs faisant partie du sous-ensemble *MGᵢ*^{*} comme choisi à l'étape précédente vers tous les autres,
Allouer des ressources radio sur les liaisons D2D définies par l'arborescence A.

Le processeur adapté à exécuter les étapes du procédé selon l'invention peut être implémenté au niveau d'une station de base du réseau de communication ou au niveau d'un serveur applicatif dédié à la gestion des communications de groupe.

D'autres caractéristiques et avantages de la présente invention apparaîtront mieux à la lecture de la description d'exemples de réalisation donnés à titre illustratif et nullement limitatif, annexée des figures qui représentent :
- Figure 1, un exemple de réseau de communication selon l'invention,
- Figure 2, une illustration de la succession des étapes mises en œuvre par le procédé selon l'invention, et
- Figure 3, un exemple d'implémentation du procédé.

Afin de mieux faire comprendre l'objet de l'invention, la description qui suit est donnée dans le cas d'un exemple d'utilisation spécifique du LTE et de ses évolutions. Cependant, sans sortir du cadre de l'invention le cas d'utilisation peut être étendu en prenant en compte une station de base IEEE 802.11 Wi-Fi, ou IEEE 802.16 WiMAX et des communications D2D qui utilisent des technologies d'accès au canal comme l'accès multiple à répartition dans le temps ou TDMA, ou la méthode d'accès au média ou CSMA/CA (*Carrier Sense Multiple Access with Collision Avoidance*)*.*

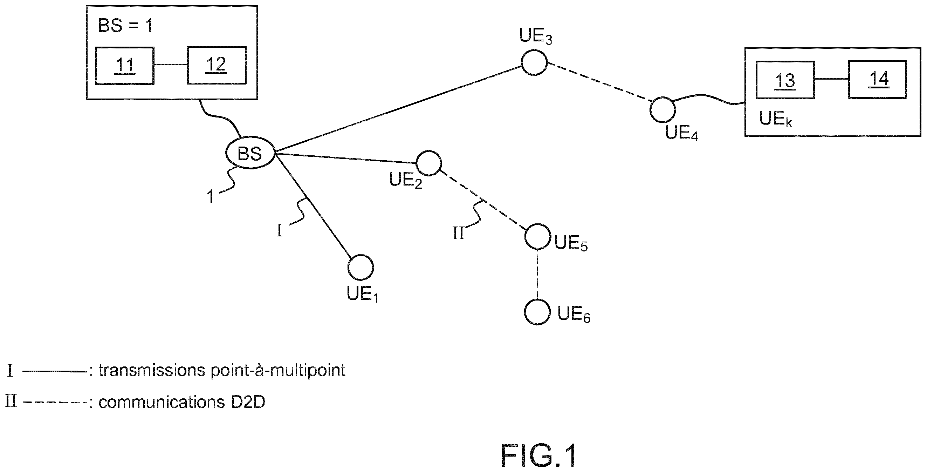

La figure 1 illustre un exemple de réseau de communication comportant une station de base 1 et plusieurs utilisateurs ou équipements destinataires UEₖ, appelés encore dispositifs mobiles. Sur la figure 1, les liens en traits pleins l entre la station de base BS et les utilisateurs UEₖ correspondent à une transmission point-à-multipoint et les liens en traits pointillés ll entre deux utilisateurs UEₖ correspondent à des transmissions point-à-point D2D.

La station de base 1 comporte un processeur 11 adapté à allouer des ressources radio en exécutant les étapes du procédé selon l'invention qui vont être décrites et un module de communication 12 avec les utilisateurs UEₖ.

Un utilisateur UEₖ (UE₁, UE₂, UE₃, UE₄, UE₅, UE₆) ou dispositif mobile comporte des moyens de communication 13, un processeur 14 adapté à mesurer la qualité de liens entre la station de base et/ou un utilisateur du réseau, ou entre deux utilisateurs.

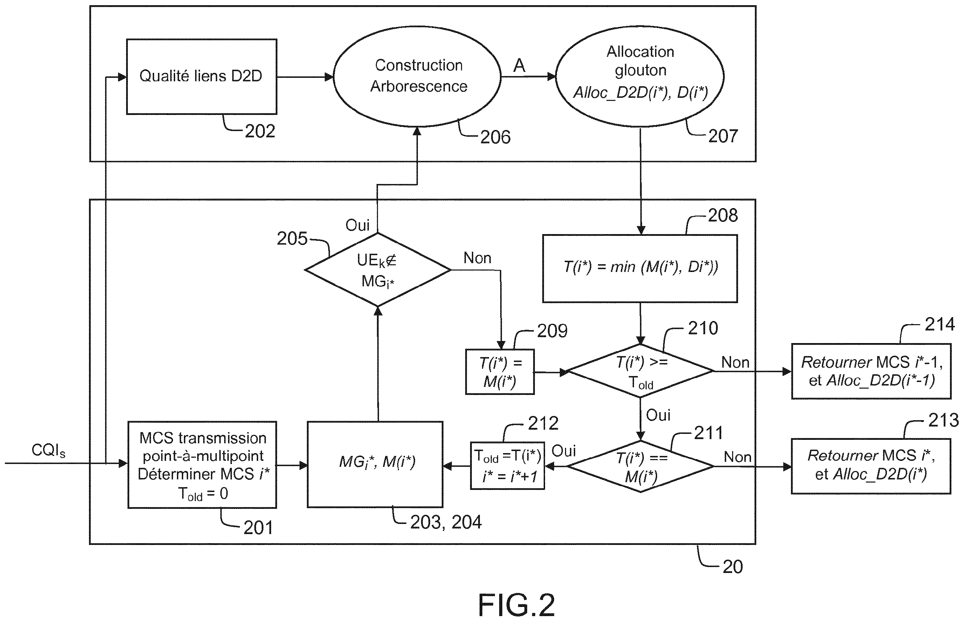

La figure 2 illustre les étapes exécutées par exemple au niveau de la station de base et des utilisateurs, en s'appuyant sur le principe suivant : sur la base d'une remontée des mesures de la qualité des liens radios, (BS→UEₖ et/ou UEₖ→UEₖ), le procédé exploite ces données afin de déterminer :
- un sous-ensemble de utilisateurs *MGi*^{*}, de cardinalité supérieure ou égale à 1, qui recevra le contenu de l'émission point-à-multipoint
- le schéma de modulation et de codage MCS à utiliser pour la transmission point-à-multipoint effectuée par la station de base afin de garantir la capacité de décoder une telle transmission à tous les utilisateurs faisant partie du sous-ensemble sélectionné *MGᵢ^{*}*,
- une arborescence A, de cardinalité supérieure ou égale à 0, qui relie tous les utilisateurs UE ou UEₖ n'appartenant pas à *MGᵢ^{*}* à un des utilisateurs appartenant au à MGi* (éventuellement à travers des communications D2D multi-bond), l'arborescence correspond aux liens D2D reliant au moins deux dispositifs mobiles UEₖ, phase de création de l'arborescence de ressources sur les liens D2D. L'union du sous-ensemble MGi* choisi et des sommets de l'arborescence A couvrent la totalité de l'ensemble initial d'utilisateurs.
- une allocation de ressources sur les liens D2D de l'arborescence A, Alloc_D2D(i*).

Le procédé selon l'invention permet avantageusement de maximiser le débit minimal reçu au niveau de chaque utilisateur et d'améliorer l'efficacité spectrale.

Le procédé illustré en figure 2 peut être exécuté au niveau de la station de base, à l'intérieur du bloc d'ordonnancement ou « scheduler » 20. Le procédé peut aussi être exécuté au niveau d'un serveur applicatif dédié à la gestion des communications de groupe qui se trouve en amont du cœur de réseau. Dans ce dernier cas, des mécanismes d'échanges d'informations entre la station de base et le serveur doivent être mis en place selon des principes connus de l'homme du métier.

Le procédé exécuté au niveau du processeur 11 de la station de base BS comporte, par exemple, les étapes suivantes, après réception ou évaluation de la valeur de la qualité des canaux radio de chaque utilisateur au niveau de la station de base :

### Etape 1,

Mesurer ou évaluer la qualité des canaux radio ou liens entre la station de base BS et les utilisateurs UEₖ, BS→UEₖ, 201 et en parallèle la qualité des canaux radio ou liens D2D existants entre les utilisateurs, UEₖ→UEₖ, 202, à partir des indicateurs de qualité de liens CQI reçus, indicatifs des capacités des liens radio de soutenir des communications réalisées avec un certain schéma de modulation et codage MCS. Ces deux mesures peuvent être réalisées simultanément. Cette étape équivaut à faire construire par l'ordonnanceur de la station de base un graphe *G(V,E)* de connectivité, où *V* est l'ensemble des utilisateurs UEₖ, et E=E1 U E2 est l'ensemble des liens entre la station de base et un utilisateur BS→UEₖ (*E₁*) et des liens entre utilisateurs D2D UEk→UEk (*E₂*) avec, pour chaque lien, leur débit espéré (en Mbps) comme poids, par exemple, ou une autre métrique de qualité de canaux radio,

### Etape 2

Considérer l'index maximum de MCS (Modulation & Coding Schéma) de la transmission point-à-multipoint qui couvre tous les UEₖ en *V (i^{*}*=*max{ i in (0..15) t.c. MCS_{V}>*= *i pour chaque v in V}* ), 201, initialiser une variable T_{old} à zéro, variable qui est sauvegardée lorsque l'index i* est incrémenté de un, i*=i*+1,

### Etape 3

Construire l'ensemble des utilisateurs UEₖ couverts par la transmission point-à-multipoint à MCS *i*^{*} - les utilisateurs qui ont la capacité de démoduler un message codé avec MCS *i*^{*}. Cet ensemble s'appelle *groupe de multicast (MGᵢ^{*}),* 203. Calculer *M(i^{*}),* le débit reçu à chaque utilisateur UEₖ appartenant à *MGᵢ^{*}* pour une transmission point-à-multipoint avec l'index de modulation et codage MCS *i^{*}, 204,*

### Etape 4

4 - 1 Si des utilisateurs n'appartiennent pas au groupe de multicast *MGᵢ^{*}*, 205, alors
   4 - 1.1 - Construire l'arborescence *A, 206,* comprenant les canaux radio qui relient chaque utilisateur UEₖ n'appartenant pas au groupe *MGᵢ^{*}* à un et un seul utilisateur UEₖ appartenant au groupe *MGᵢ^{*}* (éventuellement à travers plusieurs bonds). Ceci se fait à travers une instance modifiée de l'algorithme Edmonds-Chu, par exemple, qui prend en compte la qualité mesurée des liens D2D, 202, (complexité de l'algorithme *E₂ log V ~ V² log V*). La sortie A de l'algorithme est un sous-ensemble des liens en *E₂,*
   4 - 1.2 Utiliser un algorithme glouton, par exemple, pour l'allocation des ressources sur les liens D2D, 207. Cet algorithme glouton prend en compte l'interférence générée par l'arborescence A en empêchant d'allouer la même ressource radio (PRB ou slot TDMA selon l'implémentation choisie) à plusieurs équipements utilisateurs interférents. L'interférence peut être évaluée par les dispositifs mobiles ou équipements utilisateurs UEₖ et transmise à la station de base par les messages d'indicateurs de qualité CQI ou, à défaut, évaluée selon la position des équipements utilisateurs estimée directement par la station de base. L'algorithme glouton donne la priorité aux liens D2D qui présentent une qualité faible (peu de débit), pour garantir l'équité max-min des débits à chaque utilisateur UEₖ. La sortie de l'algorithme *Alloc_D2D(i^{*}), 207,* est l'allocation des ressources sur les liens D2D. Sa complexité est également de l'ordre de *A log V* ~ *V² log V,*
      Evaluer le débit minimum alloué sur les liens de l'arborescence A par *Alloc_D2D(i^{*})* appelé *D(i^{*}),*
   4 - 1.3 Sauvegarder T(i^{*}), qui est le débit minimum entre D(i*) calculé à l'étape 4 - 1.2 et M(i*), le débit de la transmission radio point-à-multipoint 208,
      Si le débit sur les liens D2D, D(i^{*}), est supérieur au débit de la transmission point-à-multipoint M(i*), le débit de la transmission point-à-multipoint est retenu comme débit minimum donc T(i*) = M(i*), sinon T(i*) = D(i*),
      - D(i*) représente le débit minimal sur l'arborescence D2D A dans l'allocation des ressources sur les liens, 207,
      - T(i*) est le minimum entre le débit sur les liens D2D D(i*) et le débit sur les liens multicast M(i*), T(i*)=min(D(i*), M(i*)), 208,
4 - 2 Sinon, dans le cas où tous les utilisateurs UEₖ appartiennent à MGi*, E=E₁ et T(i*) = M(i*), 209, i.e., il n'y a pas de liens D2D et le seul débit à considérer est le débit en point-à-multipoint.
A la première itération, les étapes 4-1.1 4-1.3 ne sont pas exécutées et le procédé passe directement à l'étape 4-2.

### Etape 5

Si le débit alloué aux liens présents pour l'index maximum du schéma de modulation codage *T(i^{*})* est supérieur ou égal au débit alloué pour l'index T_{old}, *210* :
o Si le débit minimum alloué aux liens *T(i^{*})==M(i^{*}),* le débit de la transmission point-à-multipoint reçu à chaque utilisateur avec la modulation et codage i*, 211
   ▪ Sauvegarder T_{old} = T(i*), passer à l'index de modulation *i*^{*}=*i*^{*}+*1*, *212,* et retourner à l'étape 3,
o Sinon, si *T(i^{*})<M(i^{*}), :*
   ▪ Retourner la valeur de MCS *i** et *Alloc_D2D(i*),* 213,
Sinon, *T(i^{*})* est inférieur à T_{old}, retourner la valeur de MCS *i*-1, 214* et son allocation D2D, *Alloc_D2D(i^{*}-1).*

La mise en œuvre du procédé selon l'invention implique la connaissance ou la capacité d'estimer la qualité des canaux radio ou liens D2D entre les utilisateurs, ainsi que la qualité des liens D2D entre la station de base et les utilisateurs.

La qualité des canaux radio D2D est, par exemple, estimée à travers la réception du signal de référence de démodulation ou DMRS (Démodulation Reference Signal) et transmise à la station de base en réutilisant un mécanisme de rétroaction prévu pour les messages d'indicateur de qualité CQI envoyés sur le canal partagé du lien physique montant PUSCH (Physical Uplink Shared Channel).

La qualité des canaux radio entre la station de base et un utilisateur, ou entre deux utilisateurs peut être évaluée à travers la connaissance des positions des utilisateurs et de la station de base ou encore en utilisant les messages d'indicateurs de qualité CQI.

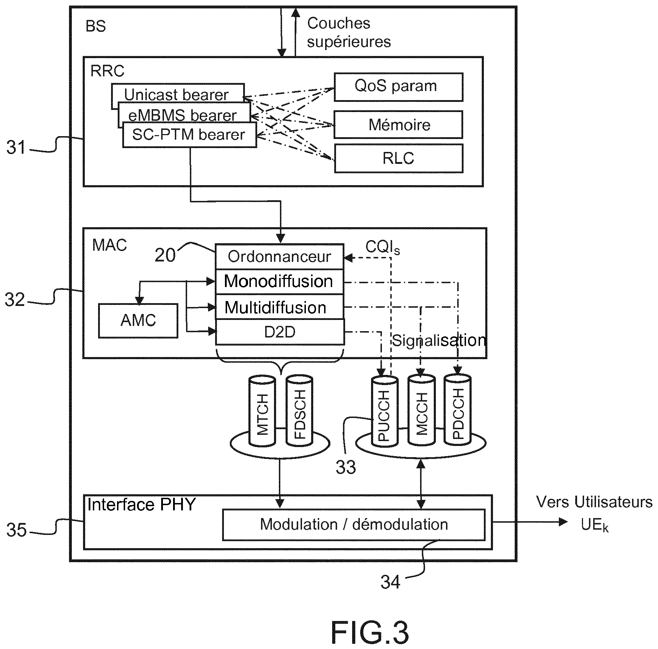

La figure 3 illustre l'implémentation du procédé selon l'invention au niveau du bloc d'ordonnancement ou scheduler de la station de base 1. La station de base 1 comprend un module RRC 31 permettant l'échange des informations de signalisation entre les équipements utilisateurs et la station de base. La couche de liaison MAC (Médium Access Control) 32 comprend le bloc d'ordonnancement ou Scheduler 20 dans lequel le procédé selon l'invention peut être exécuté. Le bloc d'ordonnancement 20 reçoit les informations de qualité de liens radio CQI avec les dispositifs mobiles ou utilisateurs. Ces informations sont transmises, par exemple, à partir du canal de contrôle de lien physique PUCCH 33 en liaison avec un module de modulation/démodulation 34 de l'interface physique PHY 35 avec les utilisateurs.

Selon la liste de cellules donnée par l'entité de coordination multi cellule ou MCE (Multicell Coordination Entity), les données multidestinataires sont transmises aux stations de bases eNB (ou BS) correspondantes. Chaque station de base eNB transmet ensuite les informations d'allocations de ressource aux utilisateurs UEₖ à travers des messages d'information de contrôle de liaison descendante ou DCI (Downlink Control Information) sur le canal PDCCH (Physical Downlink Control CHannel). Les messages DCI sont différents en fonction de la nature des communications (point-à-multipoint ou D2D). Chaque message DCI contient l'allocation de ressources et les informations d'identification temporelle sur le groupe (G-RNTI ― Group Radio Network Temporal Identifier). L'information sur l'appartenance au G-RNTI est acquise à partir de messages de configuration sur le MCCH (Multicast Control CHannel). La donnée envoyée en point-à-multipoint est ensuite transmise sur le canal partagé lien descendant PDSCH (Physical Downlink Shared CHannel) ou le canal de trafic multicast MTCH (Multicast Traffic CHannel), selon le schéma choisi par l'entité MCE (Multi-cell Coordination Entity, SC-PTM ou SF-eMBMS). Les utilisateurs UEₖ qui en ont la capacité peuvent décoder cette transmission. Les utilisateurs UEₖ qui, au contraire, n'arrivent pas à décoder vont utiliser le canal D2D avec l'allocation de ressources fournie par la station de base eNB sur le canal de contrôle PUCCH.

Selon une variante de réalisation, le procédé notifie aux utilisateurs UEₖ l'allocation de ressources choisie à la station de base en utilisant l'un des messages suivants « SCI », « DCI » et « SC-PTM configuration » et l'un des canaux disponibles dans la norme « LTE3 », « PUCCH », « MCCH » et « PDCCH ».

Selon une autre variante, le procédé notifie aux utilisateurs UEₖ l'allocation de ressources choisie par la station de base en utilisant des messages de signalisation spécifiques dans un réseau de communication utilisant une technique d'accès au canal TDMA pour notifier l'allocation de ressources choisie par la station de base aux utilisateurs UEₖ.

Le procédé selon l'invention offre notamment les avantages suivants :
- Dans le cadre d'une application LTE, une amélioration du débit global offert par la cellule LTE, et à chaque utilisateur,
- Une meilleure équité de distribution de contenu vers les utilisateurs ou un meilleur débit global de la cellule,
- Une faible complexité comparée à l'approche optimale, avec une performance très proche d'une allocation optimale ; avec une possibilité de mise en œuvre en temps réel,
- La possibilité au procédé d'être mis en place à différents endroits, directement intégré à la station de base dans le bloc d'ordonnancement, ou à un niveau applicatif sur le serveur en charge des communications groupes.

## Revendications

1. Procédé pour transmettre des contenus à un ensemble d'utilisateurs UEₖ dans un réseau de communication sans fils, en utilisant à la fois des communications point-à-multipoint entre au moins une station de base BS (1) et plusieurs utilisateurs UEₖ et des relais point-à-point ou D2D entre plusieurs utilisateurs, UEk - UEk, dans lequel le procédé alloue les ressources radio en exécutant au moins les étapes suivantes :
Mesurer ou évaluer la qualité des liens radio entre la station de base BS et les utilisateurs UEₖ (201),
Mesurer ou évaluer la qualité des liens radio D2D entre les différents utilisateurs UEₖ (202),
Sélectionner, en fonction des informations de qualité de liens, un, et seulement un, sous-ensemble de utilisateurs *MGᵢ^{*}*, de cardinalité supérieure ou égale à 1, et un schéma de modulation et de codage, MCS, à utiliser pour
la transmission point-à-multipoint effectuée par la station de base afin de garantir la capacité de décoder une telle transmission à tous les utilisateurs faisant partie du sous-ensemble sélectionné *MGᵢ^{*}*,
Considérer l'index maximum MCS i* pour le schéma de codage et de modulation de la transmission point-à-multipoint qui couvre l'ensemble des utilisateurs UEₖ du réseau, initialiser une variable T_{old} = 0,
construire l'ensemble des dispositifs utilisateurs qui ont les capacités pour démoduler le ou les messages codés et modulés avec ce schéma de codage et modulation MCS i*, qui vont former le groupe de multicast *MGᵢ^{*}*, (203, 204), calculer le débit M(i*) pour chaque utilisateur avec ce schéma de codage et de modulation,
Pour les utilisateurs ne disposant pas des capacités pour démoduler les messages codés avec le schéma MCS i*,
Construire une arborescence A composée d'un ensemble de liens L qui relient un dispositif mobile UEₖ n'appartenant pas à *MGᵢ^{*}* à un et un seul dispositif mobile UEₖ appartenant au groupe *MGᵢ^{*}* (206),
Utiliser un algorithme d'allocation des ressources sur les liens L ainsi définis (207),
Evaluer la valeur de débit minimum D(i*) alloué sur les liens L de l'arborescence A, sauvegarder la valeur minimale T(i*) correspondant au débit minimum entre D(i*) et le débit de la transmission point-à-multipoint M(i*),
Si le débit sur les liens D2D, D(i^{*}), est supérieur au débit de la transmission point-à-multipoint M(i*), le débit de la transmission point-à-multipoint est retenu comme débit minimum donc T(i*) = M(i*), sinon T(i*) = D(i*),
• D(i*) représente le débit minimal sur les liens L de l'arborescence A dans l'algorithme d'allocation des ressources (207),
• T(i*) est le minimum entre le débit sur les liens de l'arborescence D(i*) et le débit sur les liens multicast M(i*), T(i*)=min(D(i*), M(i*)), (208)
Dans le cas où tous les utilisateurs appartiennent à *MGᵢ^{*}*, alors T(i*) = M(i*), (209),
Si le débit alloué aux liens présents pour l'index maximum du schéma de modulation codage *T(i^{*})* est supérieur ou égal au débit alloué pour l'index T_{old}, (210) :
o Si le débit minimum alloué aux liens *T(i^{*})==M(i^{*}),* le débit reçu à chaque utilisateur avec la modulation et codage i*, (211)
▪ Sauvegarder T_{old} = T(i*), passer à l'index de modulation *i^{*}=i^{*} + 1, (212),* et retourner à l'étape de construction du groupe MGi*,
o Sinon, si *T(i^{*})< M(i^{*}), :*
▪ Retourner la valeur de MCS *i*^{*} et son allocation D2D, *Alloc_D2D(i*), (*213).
Sinon, *T(i^{*})* est inférieur à T_{old}, retourner la valeur de MCS *i*-1,* (214) et son allocation D2D, *Alloc_D2D(i^{*}-1).*
Allouer des ressources radio sur les liaisons D2D définies par l'arborescence A.

2. Procédé selon la revendication 1 en utilisant des messages CQI pour évaluer la qualité des liens ,BS - UEk et UEk - UEk.

3. Procédé selon la revendication 1 en utilisant la connaissance des positions des utilisateurs et de la station de base pour évaluer la qualité des liens ,BS - UEk et UEk - UEk.

4. Procédé selon la revendication 1 dans le quel l'arborescence A est construite en utilisant un algorithme d'Edmonds-Chu.

5. Procédé selon la revendication 1 dans le quel pour l'allocation des ressources un algorithme glouton est utilisé.

6. Procédé selon la revendication 1 qui est exécuté au sein d'un processeur de la station de base.

7. Procédé selon la revendication 6 dans le quel les étapes sont exécutées au niveau d'un bloc ordonnanceur (20) de la station de base BS.

8. Procédé selon l'une des revendications précédentes qu'il alloue des ressources pour la distribution d'un contenu dans un réseau de communication supportant la technologie LTE.

9. Procédé selon l'une des revendications 1 à 8 qu'il alloue des ressources pour distribuer un contenu dans un réseau de communication utilisant une technique d'accès au canal TDMA.

10. Procédé selon l'une des revendications 1 à 9 qu'il utilise un message choisi parmi les messages « SCI », « DCI » et « SC-PTM configuration » et l'un des canaux disponibles dans la norme « LTE3 », « PUCCH », « MCCH » et « PDCCH » pour transmettre l'allocation de ressources choisie à la station de base vers les utilisateurs UEₖ.

11. Procédé selon la revendication 9 qu'il utilise des messages de signalisation spécifiques dans un réseau de communication utilisant une technique d'accès au canal TDMA pour notifier l'allocation de ressources choisie par la station de base aux utilisateurs UEₖ.

12. Système pour allouer des ressources dans un réseau de communication supportant une communication point-à-multipoint entre au moins une station de base BS (1) et plusieurs utilisateurs UEₖ et des relais point-à-point ou D2D entre plusieurs utilisateurs ,UEk - UEk, le système comportant au moins un processeur adapté à allouer des ressources radio en exécutant les étapes du procédé selon l'une des revendications 1 à 11.

13. Système selon la revendication 12 ou le processeur adapté à exécuter les étapes du procédé selon l'une des revendications 1 à 11 est implémenté au niveau d'une station de base du réseau de communication.

14. Système selon la revendication 12 ou le processeur adapté à exécuter les étapes du procédé selon l'une des revendications 1 à 11 est implémenté au niveau d'un serveur applicatif dédié à la gestion des communications de groupe.

## Patentansprüche

1. Verfahren zum Übertragen von Inhalten zu einem Satz von Benutzern UEₖ in einem drahtlosen Kommunikationsnetzwerk unter Verwendung von sowohl Punkt-zu-Mehrpunkt-Kommunikationen zwischen mindestens einer Basisstation BS (1) und mehreren Benutzern UEₖ als auch Punkt-zu-Punkt- oder D2D-Relais zwischen mehreren Benutzern, UEk- UEk, wobei das Verfahren Funkressourcen zuweist, indem mindestens die folgenden Schritte durchgeführt werden:
Messen oder Beurteilen der Qualität der Funkverbindungen zwischen der Basisstation BS und den Benutzern UEₖ (201),
Messen oder Beurteilen der Qualität der D2D-Funkverbindungen zwischen den verschiedenen Benutzern UEₖ (202),
Auswählen, in Abhängigkeit von den Verbindungsqualitätsinformationen, einer und nur einer Untergruppe von Benutzern *MGᵢ^{∗}*, mit einer Kardinalität gleich oder größer als 1 und eines Modulations- und Codierschemas MCS zur Verwendung für die von der Basisstation durchgeführte Punkt-zu-Mehrpunkt-Übertragung, um allen zu der ausgewählten Untergruppe *MGi*^{∗} gehörenden Benutzern die Kapazität zum Decodieren einer solchen Übertragung zu garantieren,
Berücksichtigen des maximalen Index MCS i^{∗} für das Codier- und Modulationsschema der Punkt-zu-Mehrpunkt-Übertragung, das alle Benutzer UEₖ des Netzes abdeckt, Initialisieren einer Variablen T_{old}= 0,
Konstruieren des Satzes von Benutzergeräten, die die Kapazitäten zum Demodulieren der mit diesem Codier- und Modulationsschema MCS i^{∗} codierten und modulierten Nachricht(en) haben, die die Multicast-Gruppe *MGᵢ^{∗}*, (203, 204) bilden werden, Berechnen der Rate M(i^{∗}) für jeden Benutzer mit diesem Codier- und Modulationsschema,
für Benutzer, die nicht über die Kapazitäten zum Demodulieren der mit dem Schema MCS i^{∗} codierten Nachrichten verfügen,
Konstruieren einer Baumstruktur A, die aus einem Satz von Verbindungen L zusammengesetzt ist, die ein nicht zu MGᵢ^{∗} gehörendes mobiles Gerät UEₖ mit einem und nur einem zur Gruppe MGᵢ^{∗} (206) gehörenden mobilen Gerät UEₖ verbinden,
Verwenden eines Ressourcenzuweisungsalgorithmus auf die so definierten Verbindungen L (207),
Beurteilen des den L Verbindungen der Baumstruktur A zugewiesenen Mindestratenwertes D(i^{∗}), Sichern des Mindestwertes T(i^{∗}), welcher der Mindestrate zwischen D(i^{∗}) und der Punkt-zu-Mehrpunkt-Übertragungsrate M(i^{∗}) entspricht,
wenn die Rate auf den D2D-Verbindungen, D(i*), höher ist als die Punkt-zu-Mehrpunkt-Übertragungsrate M(i^{∗}), wird die Punkt-zu-Mehrpunkt-Übertragungsrate als Mindestrate angenommen, so dass T(i^{∗}) = M(i^{∗}), andernfalls T(i^{∗}) = D(i^{∗}),
• D(i^{∗}) repräsentiert die Mindestrate auf den Verbindungen L der Baumstruktur A im Ressourcenzuweisungsalgorithmus (207),
• T(i^{∗}) ist das Minimum zwischen der Rate auf den Verbindungen der Baumstruktur D(i^{∗}) und der Rate auf den Multicast-Verbindungen M(i^{∗}), T(i^{∗})=min(D(i^{∗}), M(i^{∗})), (208)
falls alle Benutzer zu *MGᵢ^{∗}* gehören, ist T(i^{∗}) = M(i^{∗}), (209),
wenn die den vorhandenen Verbindungen zugewiesene Rate für den maximalen Index des Codier- und Modulationsschemas *T(i*^{∗}*)* genauso groß wie oder größer als die für den Index T_{old} (210) zugewiesene Rate ist:
o wenn die den Verbindungen zugewiesene Mindestrate *T(i*^{∗}*)==M(i*^{∗}*)* ist, die empfangene Rate zu jedem Benutzer mit der Modulation und Codierung i^{∗}, (211)
▪Sichern von T_{old} = T(i^{∗}), Übergehen zu Modulationsindex i^{∗}=i^{∗}+1, (212), und Zurückkehren zum Schritt des Konstruierens der Gruppe MGi^{∗},
o andernfalls, wenn T(i^{∗})< M(i^{∗}):
▪ Zurückgeben des Wertes von MCS i^{∗}, (213) und seiner D2D-Zuweisung, Alloc_D2D(i^{∗}), (213)
andernfalls, wenn T(i^{∗}) kleiner als T_{old} ist, Zurückgeben des Wertes von MCS i^{∗}-1, (214) und seiner D2D-Zuweisung, Alloc_D2D(i^{∗}-1),
Zuweisen von Funkressourcen auf den durch die Baumstruktur A definierten D2D-Verbindungen.

2. Verfahren nach Anspruch 1, wobei CQI-Nachrichten zum Beurteilen der Qualität der Verbindungen BS - UEk und UEk - UEk verwendet werden.

3. Verfahren nach Anspruch 1, wobei die Kenntnis der Positionen der Benutzer und der Basisstation zum Beurteilen der Qualität der Verbindungen BS - UEk und UEk - UEk verwendet wird.

4. Verfahren nach Anspruch 1, wobei die Baumstruktur A unter Verwendung eines Edmonds-Chu-Algorithmus konstruiert wird.

5. Verfahren nach Anspruch 1, wobei für die Ressourcenzuweisung ein gieriger Algorithmus verwendet wird.

6. Verfahren nach Anspruch 1, das innerhalb eines Prozessors der Basisstation ausgeführt wird.

7. Verfahren nach Anspruch 6, wobei die Schritte an einem Scheduler-Block (20) der Basisstation BS durchgeführt werden.

8. Verfahren nach einem der vorherigen Ansprüche, das Ressourcen für die Verteilung eines Inhalts in einem die LTE-Technologie unterstützenden Kommunikationsnetzwerk zuweist.

9. Verfahren nach einem der Ansprüche 1 bis 8, das Ressourcen für die Verteilung eines Inhalts in einem Kommunikationsnetzwerk unter Verwendung einer TDMA-Kanalzugriffstechnik zuweist.

10. Verfahren nach einem der Ansprüche 1 bis 9, das eine aus "SCI", "DCI" und "SC-PTM-Konfiguration" ausgewählte Nachricht und einen der im "LTE3"-, "PUCCH"-, "MCCH"- und "PDCCH"-Standard verfügbaren Kanäle zum Übertragen der ausgewählten Ressourcenzuweisung zur Basisstation zu den Benutzer UEₖ verwendet.

11. Verfahren nach Anspruch 9, das spezifische Signalisierungsnachrichten in einem eine TDMA-Kanalzugriffstechnik nutzenden Kommunikationsnetzwerk zum Melden der Zuweisung von von der Basisstation ausgewählten Ressourcen zu den Benutzern UEₖ verwendet.

12. System zum Zuweisen von Ressourcen in einem Kommunikationsnetzwerk, das Punkt-zu-Mehrpunkt-Kommunikation zwischen mindestens einer Basisstation BS (1) und mehreren Benutzern UEₖ und Punkt-zu-Punkt- oder D2D-Relais zwischen mehreren Benutzern, UEk-UEk, unterstützt, wobei das System mindestens einen Prozessor aufweist, der zum Zuweisen von Funkressourcen unter Ausführung der Schritte des Verfahrens nach einem der Ansprüche 1 bis 11 ausgelegt ist.

13. System nach Anspruch 12, oder Prozessor, der ausgelegt ist, um die Schritte des Verfahrens nach einem der Ansprüche 1 bis 11 durchzuführen ist an einer Basisstation des Kommunikationsnetzwerks implementiert.

14. System nach Anspruch 12 oder Prozessor, der ausgelegt ist, um die Schritte des Verfahrens nach einem der Ansprüche 1 bis 11 durchzuführen, ist in einem Anwendungsserver implementiert, der für die Verwaltung von Gruppenkommunikationen bestimmt ist.

## Claims

1. A method for transmitting contents to a set of users UEₖ in a wireless communication network, by using both point-to-multipoint communications between at least one base station BS (1) and several users UEₖ and point-to-point or D2D relays between several users, UEₖ- UEₖ, wherein the method allocates the radio resources by executing at least the following steps:
Measure or evaluate the quality of the radio links between the base station BS and the users UEₖ (201),
Measure or evaluate the quality of the D2D radio links between the various users UEₖ (202),
Select, as a function of the information regarding quality of links, one, and only one, subset of users *MGᵢ*^{∗}*,* of cardinality greater than or equal to 1, and a modulation and coding scheme MCS to be used for the point-to-multipoint transmission performed by the base station so as to guarantee the capability to decode such a transmission to all the users forming part of the selected subset *MGᵢ*^{∗}*,*
Consider the maximum index MCS i^{∗} for the coding and modulation scheme of the point-to-multipoint transmission which covers the set of users UEₖ of the network, initialize a variable T_{old} = 0,
construct the set of user devices which have the capabilities to demodulate the message or messages coded and modulated with this coding and modulation scheme MCS i^{∗}, which will form the multicast group *MGᵢ*^{∗} *,* (203, 204), calculate the bitrate M(i^{∗}) for each user with this coding and modulation scheme,
For the users not having at their disposal capabilities to demodulate the messages coded with the scheme MCS i^{∗},
Construct a tree A composed of a set of links L which connect a mobile device UEₖ not belonging to *MGᵢ^{∗}*, to one and only one mobile device UEₖ belonging to the group *MGᵢ*^{∗} (206),
Use an algorithm for allocating the resources on the links L thus defined (207),
Evaluate the value of minimum bitrate D(i^{∗}) allocated on the links L of the tree A, save the minimum value T(i^{∗}) corresponding to the minimum bitrate between D(i^{∗}) and the bitrate of the point-to-multipoint transmission M(i^{∗}),
If the bitrate on the D2D links, D(i^{∗}), is greater than the bitrate of the point-to-multipoint transmission M(i^{∗}), the bitrate of the point-to-multipoint transmission is retained as minimum bitrate therefore T(i^{∗}) = M(i^{∗}), otherwise T(i^{∗}) = D(i^{∗}),
• D(i^{∗}) represents the minimum bitrate on the links L of the tree A in the algorithm for allocating the resources (207),
• T(i^{∗}) is the minimum between the bitrate on the links of the tree D(i^{∗}) and the bitrate on the multicast links M(i^{∗}), T(i^{∗})=min(D(i^{∗}), M(i^{∗})), (208)
In the case where all the users belong to *MGᵢ*^{∗}*,* then T(i^{∗}) = M(i^{∗}), (209),
If the bitrate allocated to the present links for the maximum index of the modulation coding scheme *T(i*)* is greater than or equal to the allocated bitrate for the index T_{old}, (210):
o If the minimum bitrate allocated to the links *T(i*)==M(i*),* the bitrate received at each user with the modulation and coding i^{∗}, (211)
▪ Save T_{old} = T(i^{∗}), pass to the modulation index *i*^{∗}*=i*^{∗}*+1,* (212), and return to the step of constructing the group MGi^{∗},
o Otherwise, if *T(i*^{∗}*) < M(i*^{∗}*):*
▪ Returning the value of MCS *i*^{∗} and its D2D allocation, *Alloc_D2D(i*^{∗}*),* (213),
Otherwise, *T(i*^{∗}*)* is less than T_{old}, return the value of MCS *i*^{∗}*-1,* (214) and its D2D allocation, *A*//*oc_D2D(i*^{∗}*-1).*
Allocate radio resources on the D2D connections defined by the tree A.

2. The method according to claim 1, using CQI messages to evaluate the quality of the links BS- UEₖ and UEₖ- UEₖ.

3. The method according to claim 1, using the knowledge of the positions of the users and of the base station to evaluate the quality of the links BS- UEₖ and UEₖ- UEₖ.

4. The method according to claim 1, wherein the tree A is constructed using an Edmonds-Chu algorithm

5. The method according to claim 1, wherein for the allocation of the resources a greedy algorithm is used.

6. The method according to claim 1 that is executed within a processor of the base station.

7. The method according to claim 6, wherein the steps are executed in a scheduler block (20) of the base station BS.

8. The method according to one of the preceding claims that allocates resources for the distribution of a content in a communication network supporting the LTE technology.

9. The method according to one of claims 1 to 8 that allocates resources for the distribution of a content in a communication network using a TDMA channel access technique.

10. The method according to one of claims 1 to 9 that uses a message chosen from among the messages "SCI", "DCI" and "SC-PTM configuration" and one of the channels available in the "LTE3", "PUCCH", "MCCH" and "PDCCH" standard to transmit the allocation of resources which is chosen at the base station to the users UEₖ.

11. The method according to claim 9, that uses specific signaling messages in a communication network using a TDMA channel access technique to notify the users UEₖ of the allocation of resources which is chosen by the base station.

12. A system for allocating resources in a communication network supporting a point-to-multipoint communication between at least one base station BS (1) and several users UEₖ and point-to-point or D2D relays between several users, UEₖ- UEₖ, the system having at least one processor adapted to allocate radio resources by executing the steps of the method according to any of claims 1 to 11.

13. The system according to claim 12 or the processor adapted to execute the steps of the method according to one of claims 1 to 11 is implemented in a base station of the communication network.

14. The system according to claim 12 or the processor adapted to execute the steps of the method according to one of claims 1 to 11 is implemented in an application server dedicated to the management of the group communications.
